**Europäisches Patentamt**

(19) **European Patent Office**

**Office européen des brevets**

(11) Veröffentlichungsnummer: **0 007 065**
**B1**

(12) # EUROPÄISCHE PATENTSCHRIFT

(45) Veröffentlichungstag der Patentschrift:
12.05.82

(51) Int. Cl.³: **F 16 B 7/00,** F 16 B 12/40

(21) Anmeldenummer: **79102270.0**

(22) Anmeldetag: **04.07.79**

(54) **Rohrverbindung für Ausstellungs-/Wohn-Möbel sowie für Spiel- und Sportgeräte.**

(30) Priorität: **06.07.78 DE 7820267 U**

(43) Veröffentlichungstag der Anmeldung:
**23.01.80 Patentblatt 80/2**

(45) Bekanntmachung des Hinweises auf die Patenterteilung:
**12.05.82 Patentblatt 82/19**

(84) Benannte Vertragsstaaten:
**AT BE CH DE FR GB IT LU NL SE**

(56) Entgegenhaltungen:
**AT-B-164 187**
**AT-B-241 765**
**DD-A-84 346**
**DE-C-549 750**
**DE-C-1 192 878**
**DE-U-6 924 984**
**DE-U-6 926 305**
**DE-U-7 806 867**
**FR-A-1 149 684**
**FR-A-1 171 656**
**GB-A-699 390**
**US-A-2 052 394**

(73) Patentinhaber: **Rüther, Hubert, Elbring 25,**
**D-2105 Seevetal 8 bei Hamburg (DE)**

(72) Erfinder: **Rüther, Hubert, Elbring 25,**
**D-2105 Seevetal 8 bei Hamburg (DE)**

(74) Vertreter: **Bartels, Hans et al, Bartels, Brandes, Held,**
**Wolff Patentanwälte Thierschstrasse 8,**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rohrverbindung für Ausstellungs-/Wohn-Möbel sowie für Spiel- und Sportgeräte

Die Erfindung betrifft eine Rohrverbindung für Ausstellungs-/Wohn-Möbel sowie Spiel- und Sportgeräte, mit zylindrischen Verbindungsrohren und Steckverbindern, die je mindestens zwei an ein Ansatzteil angeformte zylindrische Verbinderstutzen aufweisen, um Steckeinheiten zu bilden, die je durch die Steckverbindung eines Verbinderstutzens und des an ihn angesteckten Endes eines Verbindungsrohres gebildet sind, wobei jedes der beiden Enden jedes Verbindungsrohres wenigstens einen Wanddurchbruch und jeder Verbinderstutzen zumindest einen Wanddurchbruch aufweist, von denen der im radial inneren Teil jeder Steckeinheit ausgebildete Wanddurchbruch mit einer von der Kreisform abweichenden Querschnittsform versehen ist; und wobei in die Steckeinheiten eingesetzte Steckteile zum Verriegeln der Steckeinheiten vorhanden sind, welche je in die beiden zur radialen Deckung gebrachten Wanddurchbrüche einer Steckeinheit formschlüssig eingreifen.

Bei einer aus der AT-B 241 765 (Fig. 3, 4) für Fachwerke bekannten Rohrverbindung dieser Art ist als Steckteil ein flacher Keil vorgesehen, der an seinen beiden Enden je einen Splint trägt, die ihn gegen Herausfallen aus der Steckeinheit sichern. Dieser mit Splinten versehene Keil ist wohl für Dauereinrichtungen, nicht aber für demontierbare Möbel oder Geräte geeignet, da seine Anbringung und Entfernung einen zeitraubenden Montageaufwand erfordern.

Der Erfindung liegt die Aufgabe zugrunde, eine schnell herstellbare und rasch lösbare Rohrverbindung für ein Möbel oder Gerät zu schaffen, dessen Bauteile ein System von wenigen Bauelementen darstellen, aus denen beispielsweise Spielgerüste für Kinder leicht und sicher errichtet sowie umgebaut werden können. Dies soll durch geeignete Ausgestaltung der Verbindungsrohre und/oder Steckverbinder sowie der Steckteile geschehen.

Die vorstehende Aufgabe ist erfindungsgemäß dadurch gelöst, daß die Steckteile als um ihre Achse drehbare Knebel ausgebildet sind, welche nach Drehung die Berandung des Wanddurchbruches im radial inneren Teil der Steckeinheit hintergreifen und im zylindrisch ausgebildeten Wanddurchbruch des radial äußeren Teiles versenkt sind. Dadurch ist die Steckverbindung in dem Sinne formschlüssig, daß die Steckeinheit aus Rohrende und Verbinderstutzen von jedem dieser ihrer Teile aus eine formschlüssige Verbindung zum Knebel hat, der das Bindeglied zwischen Rohrende und Verbinderstutzen darstellt.

Es besteht die Möglichkeit, als inneres Teil der Steckeinheit wahlweise entweder das Rohrende oder den Verbinderstutzen vorzusehen. Die Patentansprüche erstrecken sich daher auch nach ihrem Wortlaut auf die beiden genannten Alternativen.

Es ist zwar aus der DE-GS 6 924 984 ein Kopf-und Schließteil aufweisendes Element zur lösbaren Verbindung von zwei Spielbausteinen wie Stäben bekannt, wobei der Kopfteil versenkt in einen Baustein eingreift und der Schließteil mit einer schlüssellochartigen Bohrung eines anderen Bausteines verriegelbar ist. Diese Verbindung ist relativ aufwendig, weil das Verbindungselement die Stäbe auch in seiner Längsrichtung zusammenhalten muß. Dies ist bei versenktem Kopfteil nur mit einer abgestuften Bohrung, mit einer zylindrischen Bohrung jedoch nicht möglich. Durch den erfindungsgemäß zylindrischen, insbesondere kreiszylindrischen Wanddurchbruch im äußeren Teil wird eine vereinfachte Herstellung ermöglicht.

Bei einer bevorzugten Ausführungsform der erfindungsgemäßen Rohrverbindung weist die von der Kreisform abweichende Querschnittsform eines der beiden zusammenwirkenden Wanddurchbrüche der Steckeinheit eine aus Kreis und schmalem Halboval gebildete Form ähnlich einem Schlüsselloch auf und besitzt der Knebel einen Schaft mit einer der Kreisform angepaßten kreisrunden Querschnittsform sowie einen durch das Halboval passenden Drehriegel am radial inneren Ende des Schaftes. Insbesondere ist vorgesehen, daß der eine kombinierte Kreis- und Halbovalform aufweisende Wanddurchbruch-Querschnitt eine aus Kreis und schmalerem konzentrischem Ganzoval gebildete Form hat und daß der Drehriegel dem Ganzoval angepaßt ist. In diesem Fall ist es gleichgültig, ob der Knebel so oder bezüglich seiner Schaftachse um 180° gedreht radial eingeführt wird. Außerdem ist der Knebel auch dann noch brauchbar, wenn von seinem Drehriegel ein Ende abgebrochen ist.

Bei der bevorzugten Ausführungsform weist der im radial äußeren Teil der Steckeinheit ausgebildete Wanddurchbruch-Querschnitt eine kreiszylindrische Form auf und entspricht sein Durchmesser der längsten, in einer bezüglich des Knebelschaftes radialen Richtung gemessenen Erstreckung des Drehriegels angenähert. Ein solcher Wanddurchbruch läßt sich auch nachträglich leicht durch Bohren herstellen, wobei seine lichte Weite natürlich so bemessen sein muß, daß der Drehriegel zumindest nach Schrägstellung des Knebels hindurchtreten kann.

Der Knebel der bevorzugten Ausführungsform besitzt einen in den Wanddurchbruch im radial äußeren Teil der Steckeinheit passenden Drehkopf am radial äußeren Ende seines Schaftes. Mittels dieses Drehkopfes, der im radial äußeren Teil der Steckeinheit verschwindet, läßt sich der Knebel bequem um 90° zum Verriegeln bzw. Entriegeln drehen.

Bei der bevorzugten Ausführungsform weist der Drehkopf des Knebels einen münzbreiten Schraubenkopfschlitz auf, so daß jedes mit einer Münze versehene Kind den Knebel und damit den Drehriegel bequem verdrehen kann.

Bei der bevorzugten Ausführungsform weist die dem Drehriegel abgekehrte Oberseite des Drehkopfes eine der äußeren kreiszylindrischen Wölbung des radial äußeren Teiles der Steckeinheit angepaßte kreiszylindrische Wölbung auf. In einer bestimmten Drehlage des Knebels verschwindet also der Drehkopf in der für ihn ausgesparten Wandung des radial äußeren Teiles der Steckeinheit ohne überzustehen und dadurch zu stören.

Bei der bevorzugten Ausführungsform weist die dem Drehkopf zugekehrte Oberseite des Drehriegels eine der inneren kreiszylindrischen Wölbung des radial inneren Teiles der Steckeinheit angepaßte kreiszylindrische Wölbung auf. Dadurch wird die größtmögliche Berührungsfläche, die dem Drehriegel und dem inneren Teil der Steckeinheit gemeinsam ist, erzeugt, so daß eine insbesondere bei auch kraftschlüssiger Steckverbindung hinreichende Haftreibung des Drehriegels am inneren Teil der Steckeinheit vorhanden ist, welche verhindert, daß sich der Knebel unbeabsichtigt um die Achse seines Schaftes dreht.

Die bevorzugte Ausführungsform zeichnet sich dadurch aus, daß der Schraubenkopfschlitz parallel zur Haupterstreckung des Drehriegels verläuft, daß die Ovallängsachse des Wanddurchbruches im radial inneren Teil der Steckeinheit parallel zur Längsachse dieses zylindrischen Teiles angeordnet ist und daß die Zylinderachse der Wölbung der Drehkopf-Oberseite quer zum Schraubenkopfschlitz und Drehriegel verläuft. Damit ist eine Anordnung getroffen worden, die eine spielfreie Verriegelung gewährleistet; die an der Orientierung des Schraubenkopfschlitzes ohne weiteres erkennen läßt, wie der Drehriegel steht; und die mit der Forderung verträglich ist, den Drehkopf im Zustand der Verriegelung äußerlich nicht spüren und nicht in Erscheinung treten zu lassen.

Bei einer Variante der bevorzugten Ausführungsform ist der Drehkopf des Knebels auf seiner dem Drehriegel zugewandten Unterseite mit zwei einander bezüglich dieses Schaftes diametral gegenüberliegenden Noppen versehen, deren Verbindungsgerade parallel zum Drehriegel des Knebels verläuft und die sich beim Zurückdrehen des Knebels auf der Berandung des Wanddurchbruches im radial inneren Teil der Steckeinheit abstützen und dabei den Knebel radial nach außen heben. Damit ist gewährleistet, daß der Drehkopf des gelösten Knebels zu dessen Entnahme auch tatsächlich erfaßt werden kann.

Bei der Variante weist jeder Verbinderstutzen vier Wanddurchbrüche auf, deren ein Kreuz bildende radiale Achsen sich auf der Stutzenachse schneiden, und weist jedes Rohrende nur einen Wanddurchbruch auf. Einerseits braucht das Verbindungsrohr dank der Vierzahl von Wanddurchbrüchen im Verbinderstutzen nie um mehr als 90° um seine Längsachse gedreht zu werden, um mit dem Verbinderstutzen im obengenannten Sinne mittels eines Knebels formschlüssig verbunden werden zu können. Andererseits weist das Rohrende nur eine einzige Materialschwachstelle und nach dem Herstellen der Steckverbindung nur eine einzige geringe Unebenheit auf, da der Drehkopf eines die Steckeinheit gegen axialen Zug und umfängliche Verdrehung sichernden Knebels den Wanddurchbruch im Rohrende praktisch ausfüllt.

Dabei verdeckt das Rohrende die drei unbenutzten Wanddurchbrüche im Verbinderstutzen. Dies setzt natürlich voraus, daß das Rohrende das radial äußere Teil und der Verbinderstutzen das radial innere Teil der Steckeinheit ist. Diese Relativanordnung ist vorteilhaft, weil sie eine im umgekehrten Falle auftretende Stufe beim Übergang vom Verbinderstutzen zum Rohrende oder eine stufenförmige Verjüngung des Rohrendes zu dessen glattem Anschluß an den Verbinderstutzen vermeidet.

Bei der Variante sind vorzugsweise die Verbindungsrohre auf ihrer Innenseite je mit achsparallelen Längsnuten versehen, die eine Materialersparnis bringen, ohne die Festigkeit des Verbindungsrohres wesentlich zu beeinträchtigen. Außerdem wirken die Längsnuten als Schmutzfänger, welche die durch Schmutz nachteilig gestörte Gleitpassung von Verbinderstutzen und Rohrende bei einer Relativdrehung beider Teile der Steckeinheit vom Schmutz befreien und dadurch wieder gängig machen. Hierbei ist insbesondere an das Eindringen von Sand gedacht.

Bei der Variante verjüngt sich der Schraubenkopfschlitz des Drehkopfes am Knebel in seiner Längs- und Tiefenrichtung keilförmig. Die Verjüngung in einer dieser beiden Richtungen kann genügen. Sie bewirkt in jedem Fall, daß der Drehkopf des Knebels an einem zu dessen Drehung benutzten Drehwerkzeug oder Schlüssel festklemmt und mit letzterem von der Steckeinheit entfernt werden kann.

Schließlich zeichnet sich die Variante dadurch aus, daß der Querschnitt des Wanddurchbruches im radial äußeren Teil der Steckeinheit und der Drehkopf des Knebels von der Kreisform an je mindestens einer Raststelle ein wenig abweichen, wobei die Abweichungen komplementär sind. Das Verrasten des Drehkopfes im Wanddurchbruch des radial äußeren Teiles, bei dem es sich um ein Rohrende handeln soll, wirkt der latenten Neigung des Drehriegels des Knebels entgegen, sich parallel zur Rohr- und Stutzenachse zu stellen und dadurch sowohl die kraftschlüssige Verbindung des Drehriegels mit dem radial inneren Teil, also dem Verbinderstutzen, zu lösen als auch die formschlüssige Verbindung des Knebels mit dem radial inneren Teil zu gefährden. Ein Verrasten ist aber nicht unbedingt erforderlich, da bei der Variante die erwähnten Noppen am Drehkopf des Knebels vorgesehen sind, welche für eine Selbsthemmung des Knebels sorgen und es erfordern, daß der Knebel zur Ausführung eines radialen Hubes unter Überwindung dieser Selbsthemmung mit Bedacht gedreht werden muß.

Im folgenden ist die Erfindung anhand der durch die Zeichnung beispielhaft dargestellten, bevorzugten Ausführungsform der erfindungsgemäßen Rohrverbindung und ihrer Variante im einzelnen erläutert. Es zeigt

Fig. 1 eine Draufsicht auf einen Steckverbinder und auf zwei Steckeinheiten der Ausführungsform, bei denen die Enden zweier Verbindungsrohre teilweise bzw. ganz auf je einen Stutzen des Steckverbinders aufgesteckt sind;

Fig. 2 einen Längsschnitt nach der Linie II-II in Fig. 1 durch eine der beiden Steckeinheiten mit radial entferntem Knebel;

Fig. 3 bis 5 zwei verschiedene Seitenansichten des Knebels der Ausführungsform (die zu verbindenden Teile sind angedeutet) bzw. eine Ansicht des Knebels von unten;

Fig. 6 eine Seitenansicht eines Steckverbinders und einer Steckeinheit der Variante in Explosionsdarstellung;

Fig. 7 einen Querschnitt nach der Linie VII-VII in Fig. 6 durch ein Rohrende dieser Steckeinheit;

Fig. 8 eine Draufsicht auf den Steckverbinder und die Steckeinheit der Variante mit Knebel und

Fig. 9 bis 11 zwei verschiedene Seitenansichten des Knebels der Variante (die zu verbindenden Teile sind angedeutet) bzw. eine Ansicht dieses Knebels von unten.

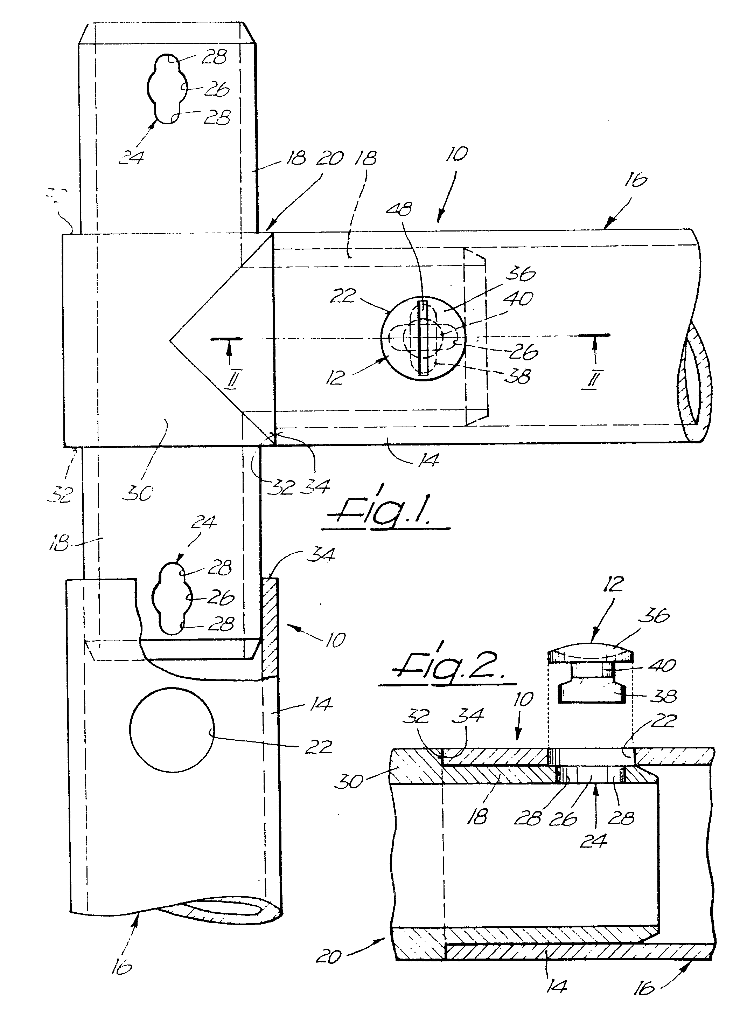

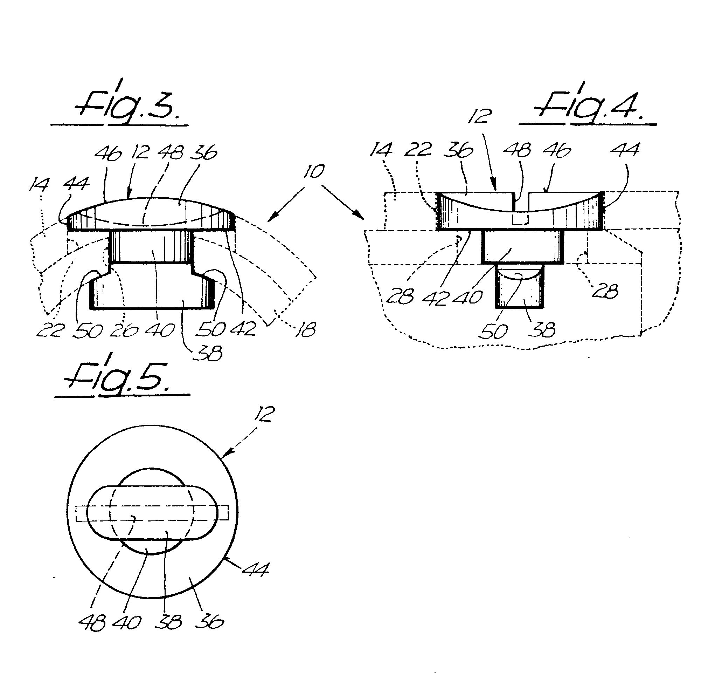

Die in den Fig. 1 bis 5 dargestellten Teile der Ausführungsform weisen zwei Steckeinheiten 10 und je einen Knebel 12 auf, wobei jede Steckeinheit 10 ihrerseits aus einem Rohrende 14 eines Verbindungsrohres 16 und aus einem Verbinderstutzen 18 eines Steckverbinders 20 besteht, die eine Steckverbindung eingegangen sind.

Das Rohrende 14 der Steckeinheit 10 ist wie das ganze Verbindungsrohr 16 kreiszylindrisch geformt und weist einen kreisrunden Wanddurchbruch in Form einer radialen Bohrung 22 auf. Der Verbinderstutzen 18 der Steckeinheit 10 ist ebenfalls kreiszylindrisch geformt, und auch er weist einen radialen Wanddurchbruch, jedoch in Form eines Doppelbartschlüsselloches 24 auf, dessen besondere Gestalt durch die Überlagerung einer Bohrung 26 mit einer konzentrischen ovalen Ausnehmung 28 entstanden ist, deren Längsachse parallel zur Längsachse des Verbinderstutzens 18 verläuft und dessen Breite merklich geringer ist als der Durchmesser der Bohrung 26, der seinerseits nur ungefähr so groß ist wie der Radius der Bohrung 22 im Rohrende 14, deren Durchmesser nur wenig größer ist als die Länge der Ausnehmung 28.

Der Steckverbinder 20 ist ein T-Stück und weist deshalb zwei koaxiale Verbinderstutzen 18 und einen senkrecht dazu stehenden Verbinderstutzen 18 auf. Die drei Verbinderstutzen 18 sind durch einen Ansatzteil 30 starr miteinander verbunden, wobei an der Wurzel jedes dem Ansatzteil entspringenden Stutzens um diesen eine kreisringförmige Anschlagfläche 32 des Ansatzteiles 30 verläuft, die bei vollständig aufgestecktem Rohrende 14 dessen kreisringförmige Stirnfläche 34 berührt.

Die Außendurchmesser der Anschlagfläche 32 und des Verbindungsrohres 16 stimmen überein, desgleichen die Innendurchmesser beider. Der Außendurchmesser des Verbinderstutzens 18 ist gleich groß wie der Innendurchmesser des Verbindungsrohres 16. Der am Rohrende 14 meßbare Abstand der beiden durch die Stirnflächen 34 bzw. den Mittelpunkt der Bohrung 22 bestimmten Ebenen voneinander, die von der Längsachse des Verbindungsrohres 16 senkrecht durchstoßen werden, stimmt mit dem am Verbinderstutzen 18 meßbaren Abstand der beiden durch den Symmetrie- und Mittelpunkt des Loches 24 bzw. die ihm zugeordnete Anschlagfläche 32 bestimmten Ebenen voneinander, die von der Längsachse des Verbinderstutzens 18 senkrecht durchstoßen werden, genau überein.

Der Knebel 12 ist in drei Abschnitte gegliedert, nämlich einen Drehkopf 36, einen Drehriegel 38 sowie einen Kopf und Riegel verbindenden Schaft 40. Der Drehkopf 36 weist auf seiner Unterseite eine den Schaft 40 umgebende, ebene, kreisringförmige Anlagefläche 42 auf, deren Zweck bei der Erläuterung der Variante der Ausführungsform deutlich wird. Die kreiszylindrische Umfangsfläche 44 des Drehkopfes 36 hat einen Durchmesser, der dem Durchmesser der Bohrung 22 im Rohrende 14 angepaßt ist. Auf seiner Oberseite 46 befindet sich im Drehkopf 36 ein münzbreiter Schraubenkopfschlitz 48, der in einer von der Achse der Wölbung an der Oberseite 46 senkrecht durchstoßenen Ebene kreisbogenförmig verläuft.

Der Schaft 40 des Knebels 12 ist ein massiver Kreiszylinder, dessen Durchmesser der Bohrung 26 des Loches 24 im Verbinderstutzen 18 angepaßt ist.

Der Drehriegel 38 des Knebels 12 ist der ovalen Ausnehmung 28 entsprechend ein Doppelschuh, der durch diese Ausnehmung paßt und zwei dem Drehkopf 36 zugewandte Schultern 50 aufweist, die gleich ausgebildet sind und je eine kreiszylindrische Wölbung zeigen, deren Krümmung mit der Krümmung an der Innenseite des Verbinderstutzens 18 übereinstimmt. Die Haupterstreckungsrichtung des Drehriegels 38, die von Schulter 50 zu Schulter 50 geht, liegt in der vom Schraubenkopfschlitz 48 des Drehkopfes 36 bestimmten Ebene. Die Wölbungen der Schultern 50 des Drehriegels 38 sind natürlich gleich und konzentrisch zu der schwächer gekrümmten Wölbung an der Oberseite 46 des Drehkopfes 36. Der parallel zur Achse des Knebelschaftes 40 gemessene, mit zunehmendem Abfall der Schultern 50 anwachsende Abstand des Drehriegels 38 von der unteren Anlagefläche 42 des Drehkopfes 36 ist so bemessen, daß der Drehkopf 36 die Berandung der Bohrung 26 im Verbinderstutzen 18, soweit sie nicht durch die Ausnehmung 28 beseitigt ist, berührt, wenn die Schultern 50 des Drehriegels 38 am Verbinderstutzen 18 inwendig anliegen.

Nach dem Fügen der Steckverbindung durch axiales Aufstecken eines Rohrendes 14 auf einen Verbinderstutzen 18, die dann eine Steckeinheit bilden, in der Weise, daß die Bohrung 22 im Rohrende 14 konzentrisch zu dem Doppelbartschlüsselloch 24 im Verbinderstutzten 18 angeordnet ist, wozu es erforderlich sein kann, das Verbindungsrohr 16 um seine Längsachse zu drehen, wird der Knebel 12 mit seinem Drehriegel 38 voran radial von außen nach innen erst durch die Bohrung 22 und dann in geeigneter Drehlage durch das Loch 24 teilweise in die Steckeinheit 10 eingeführt und anschließend bezüglich der radial stehenden Achse seines Schaftes 40 um 90° gedreht, wobei die beiden Schultern 50 des Drehriegels 38 unter die an die Ausnehmung 28 anschließende Berandung der Bohrung 26 geschwenkt werden, so daß der Drehriegel 38 den Verbinderstutzen 18 hintergreift, während der vor dem Drehen des Knebels 12 aus der Bohrung 22 stellenweise herausragende Drehkopf 36 diese Bohrung 22 nun nahezu vollständig ausfüllt und sich der Oberfläche des Rohrendes 14 anschmiegt. Zum Entriegeln der Steckverbindung braucht der Knebel 12 nur um 90° weiter- oder zurückgedreht zu werden, worauf er dem Loch 24 im Verbinderstutzen 18 und der Bohrung 26 im Rohrende 14 entnommen werden kann. Nach dem Entfernen des Knebels 12 kann das Verbindungsrohr 16 vom Verbinderstutzen 18 axial abgezogen werden.

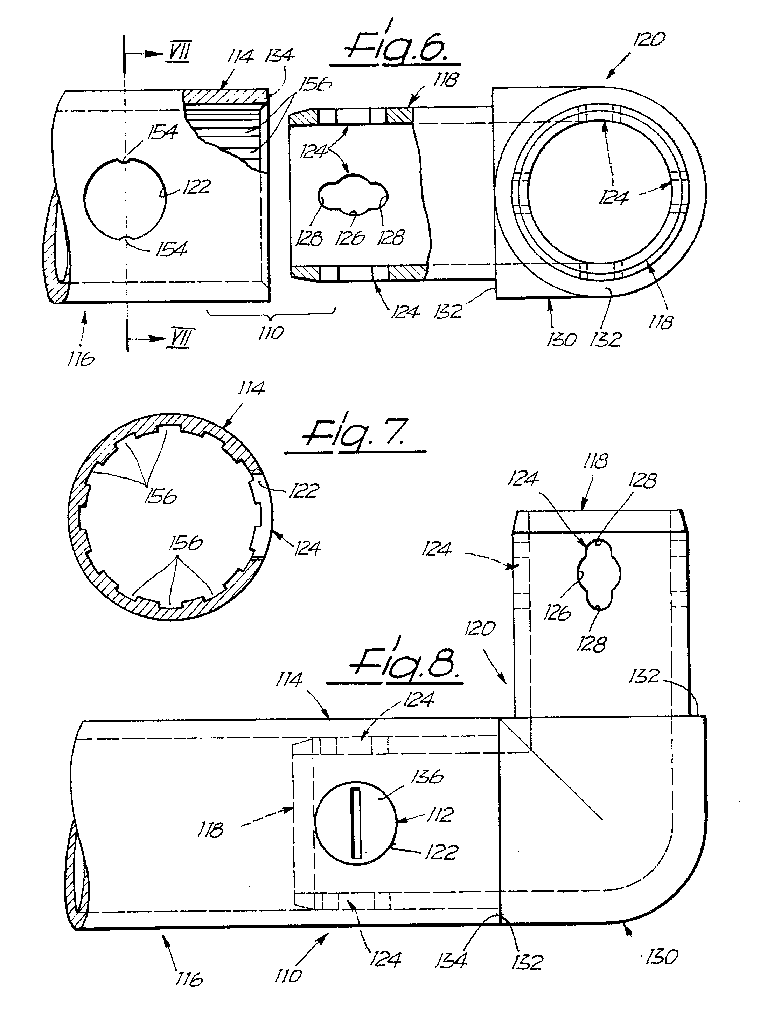

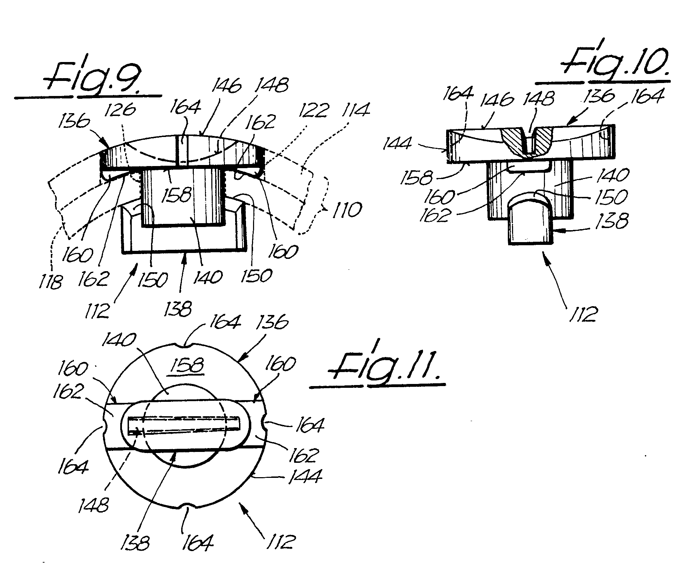

Die in den Fig. 6 bis 11 dargestellte Variante der Ausführungsform wird nachstehend nur insoweit erläutert, als Unterschiede zur Ausführungsform bestehen. Den bereits erläuterten Teilen der Ausführungsform gemäß Fig. 1 bis 5 gleichende oder entsprechende Teile sind mit um 100 höheren Bezugszahlen bezeichnet. Für sie gilt die vorstehende Beschreibung wörtlich bzw. sinngemäß.

Bei der Variante ist die einzige Bohrung 122 im Rohrende 114 des Verbindungsrohres 116 mit zwei einander diametral gegenüberliegenden, radial nach innen vorspringenden Näschen 154 versehen, deren Verbindungsgerade die Rohrachse im rechten Winkel kreuzt. Auf seiner Innenseite ist das Verbindungsrohr 116 mit achsparallelen Längsnuten 156 geringer Tiefe und größerer Breite versehen.

Der Steckverbinder 120 ist ein 90°-Winkelstück mit zwei Verbinderstutzen 118, von denen jeder vier Wanddurchbrüche in Form der Doppelbartschlüssellöcher 124 aufweist, deren ein Kreuz bildende radiale Achsen sich auf der Stutzenachse schneiden. Die vier Löcher 124 sind also in ein und derselben Radialebene gleichmäßig auf den Umfang jedes Verbinderstutzens 118 verteilt.

Der Drehkopf 136 des Knebels 112 ist auf seiner dem Drehriegel 138 zugewandten Unterseite 158 mit zwei einander bezüglich des Schaftes 140 diametral gegenüberliegenden Noppen 160 versehen, deren Verbindungsgerade parallel zum Drehriegel 138 verläuft. Die Noppen 160 weisen je eine einer Schulter 150 des Drehriegels 138 gegenüberliegende Gegenschulter 162 auf, die gleich ausgebildet sind und je eine kreiszylindrische Wölbung zeigen, deren Krümmung mit der Krümmung an der Außenseite des Verbinderstutzens 118 genau übereinstimmt und somit eine die Achse des Schaftes 140 rechtwinklig kreuzende Gerade als Mittelachse hat, während für eine Schulter 150 des Drehriegels 138 der Krümmungsmittelpunkt auf einer die Achse des Schaftes 140 schräg schneidenden Geraden liegt. In seiner Umfangsfläche 144 ist der Drehkopf 136 mit vier gleichmäßig auf den Umfang verteilten, paarweise die beiden Näschen 154 an der Bohrung 122 des Rohrendes 114 aufnehmenden Einbuchtungen 164 versehen, die ebenso schwach wie die ihnen zugeordneten Näschen 154 ausgeformt sind und mit diesen zwei Raststellen bilden, die den Knebel 112 in seinen beiden um 90° verschiedenen Hauptdrehlagen leicht verrasten, insbesondere in der aus Fig. 9 ersichtlichen Verriegelungsstellung des Drehriegels 138. Der selbsttätigen Entriegelung wirken aber auch die beiden Noppen 160 entgegen, deren Hauptzweck es ist, sich beim Zurückdrehen des Knebels 112 auf der Berandung des Loches 124 im Verbinderstutzen 118 abzustützen und dabei den Knebel radial nach außen zu heben.

Der Schraubenkopfschlitz 148 im Drehkopf 136 des Knebels 112 verjüngt sich sowohl in seiner Längsrichtung als auch in seiner Tiefenrichtung keilförmig, so daß das zum Entfernen des Knebels benutzte Werkzeug, beispielsweise eine Münze, im Schlitz festgeklemmt wird und den Knebel dadurch mitnimmt.

**Patentansprüche**

1. Rohrverbindung für Ausstellungs-/Wohn-Möbel sowie Spiel- und Sportgeräte, mit zylindrischen Verbindungsrohren und Steckverbindern (20), die je mindestens zwei an ein Ansatzteil angeformte zylindrische Verbinderstutzen (18) aufweisen, um Steckeinheiten (10) zu bilden, die je durch die Steckverbindung eines Verbinderstutzens (18) und des an ihn angesteckten Endes (14) eines Verbindungsrohres (16) gebildet sind, wobei jedes der beiden Enden (14) jedes Verbindungsrohres (16) wenigstens einen Wanddurchbruch (22) und jeder Verbinderstutzen (18) zumindest einen Wanddurchbruch (24) aufweist, von denen der im radial inneren Teil (18) jeder Steckeinheit (10) ausgebildete Wanddurchbruch (24) mit einer von der Kreisform abweichenden Querschnittsform versehen ist; und wobei in die Steckeinheiten (10) eingesetzte Steckteile (12) zum Verriegeln der Steckeinheiten (10) je in die beiden zur radialen Deckung gebrachten Wanddurchbrüche (22, 24) einer Steckeinheit (10) formschlüssig eingreifen, dadurch gekennzeichnet, daß die Steckteile als um ihre Achse drehbare Knebel (12) ausgebildet sind, welche nach Drehung die Berandung des Wanddurchbruches (24) im radial inneren Teil (18) der Steckeinheit (10) hintergreifen und im zylindrisch ausgebildeten Wanddurchbruch (22) des radial äußeren Teiles (14) der Steckeinheit (10) versenkt sind.

2. Rohrverbindung nach Anspruch 1, dadurch gekennzeichnet, daß die von der Kreisform abweichende Querschnittsform eines (24) der beiden zusammenwirkenden Wanddurchbrüche (22, 24) der Steckeinheit (10) eine aus Kreis (26) und schmalem Halboval (28) gebildete Form aufweist und daß der Knebel (12) einen Schaft (40) mit einer der Kreisform (26) angepaßten kreisrunden Querschnittsform sowie einen durch das Halboval (28) passenden Drehriegel (38) am radial inneren Ende des Schaftes (40) besitzt.

3. Rohrverbindung nach Anspruch 2, dadurch gekennzeichnet, daß der eine kombinierte Kreis- und Halbovalform aufweisende Wanddurchbruch(24)-Querschnitt eine aus Kreis (26) und schmalerem, konzentrischem Ganzoval (28) gebildete Form hat und daß der Drehriegel (38) dem Ganzoval (28) angepaßt ist.

4. Rohrverbindung nach Anspruch 2 oder 3, dadurch gekennzeichnet, daß der im radial äußeren Teil (14) der Steckeinheit (10) ausgebildete Wanddurchbruch (22) kreiszylindrisch ausgebildet ist und sein Durchmesser der längsten in einer bezüglich des Knebelschaftes (40) radialen Richtung gemessenen Erstreckung des Drehriegels (38) angenähert entspricht.

5. Rohrverbindung nach Anspruch 4, dadurch gekennzeichnet, daß der Knebel (12) einen in den Wanddurchbruch (22) im radial äußeren Teil (14) der Steckeinheit (10) passenden Drehkopf (36) am radial äußeren Ende des Schaftes (40) besitzt.

6. Rohrverbindung nach Anspruch 5, dadurch gekennzeichnet, daß der Drehkopf (36) einen münzbreiten Schraubenkopfschlitz (48) aufweist.

7. Rohrverbindung nach Anspruch 5 oder 6, dadurch gekennzeichnet, daß die dem Drehriegel (12) abgekehrte Oberseite (46) des Drehkopfes (36) eine der äußeren kreiszylindrischen Wölbung des radial äußeren Teiles (14) der Steckeinheit (10) angepaßte kreiszylindrische Wölbung aufweist.

8. Rohrverbindung nach einem der Ansprüche 5 bis 7, dadurch gekennzeichnet, daß die dem Drehkopf (36) zugekehrte Oberseite (50) des Drehriegels (38) eine der inneren kreiszylindrischen Wölbung des radial inneren Teiles (18) der Steckeinheit (10) angepaßte kreiszylindrische Wölbung aufweist.

9. Rohrverbindung nach einem der Ansprüche 6 bis 8, dadurch gekennzeichnet, daß der Schraubenkopfschlitz (48) parallel zur Haupterstreckung des Drehriegels (38) verläuft, daß die Ovallängsachse des Wanddurchbruches (24) im radial inneren Teil (18) der Steckeinheit (10) parallel zur Längsachse dieses zylindrischen Teiles (18) angeordnet ist und daß die Zylinderachse der Wölbung der Drehkopf-(36)-Oberseite (46) quer zum Schraubenkopfschlitz (48) und Drehriegel (38) verläuft.

10. Rohrverbindung nach einem der Ansprüche 5 bis 9, dadurch gekennzeichnet, daß der Drehkopf (136) des Knebels (112) auf seiner dem Drehriegel (138) zugewandten Unterseite (158) mit zwei einander bezüglich dieses Schaftes (140) diametral gegenüberliegenden Noppen (160) versehen ist, deren Verbindungsgerade parallel zum Drehriegel (138) des Knebels (112) verläuft und die sich beim Zurückdrehen des Knebels (112) auf der Berandung des Wanddurchbruches (124) im radial inneren Teil (118) der Steckeinheit (110) abstützen und dabei den Knebel (112) radial nach außen heben.

11. Rohrverbindung nach einem der Ansprüche 1 bis 10, dadurch gekennzeichnet, daß jeder Verbinderstutzen (118) vier Wanddurchbrüche (124) aufweist, deren ein Kreuz bildende radiale Achsen sich auf der Stutzenachse schneiden, und daß jedes Rohrende (114) nur einen Wanddurchbruch (122) aufweist.

12. Rohrverbindung nach einem der Ansprüche 1 bis 11, dadurch gekennzeichnet, daß die Verbindungsrohre (116) auf ihrer Innenseite je mit achsparallelen Längsnuten (156) versehen sind.

13. Rohrverbindung nach einem der Ansprüche 6 bis 12, dadurch gekennzeichnet, daß der Schraubenkopfschlitz (148) des Drehkopfes (136) am Knebel (112) sich in seiner Längs- und/oder Tiefenrichtung keilförmig verjüngt.

14. Rohrverbindung nach einem der Ansprüche 5 bis 13, dadurch gekennzeichnet, daß der Querschnitt des Wanddurchbruches (122) im radial äußeren Teil (114) der Steckeinheit (110) und der Längsschnitt des Drehkopfs (136) des Knebels (112) von der Kreisform an je mindestens einer Raststelle ein wenig abweichen, wobei die Abweichungen (154, 164) komplementär sind.

## Claims

1. Tube connection for exhibition/domestic furniture and games and sports equipment, comprising cylindrical connecting tubes and push-pull connectors (20), each having at least two cylindrical connecting stumps (18) formed on a centrepiece to constitute connecting units (10) each of which is formed by the plug and socket type of connection between a connecting stump (18) and the end (14) of a connecting tube (16) pushed on it, each of the two ends (14) of the connecting tube (16) having at least one wall opening (22), and each connecting stump (18) having at least one wall opening (24), that wall opening (24) which is formed in the radially inner part (18) of each connecting unit (10) having a non-circular cross-sectional form; connecting elements (12) inserted in the connecting units (10) for locking the connecting units (10) engaging in a form locking manner in the two wall openings (22, 24) of a connecting unit (10) which have been brought into radial alignment, characterised in that the connecting elements consist of toggles (12) which are rotatable about their axis and which, after rotation, grip behind the edge of the wall opening (24) in the radially inner part (18) of the connecting unit (10) and are sunk into the cylindrically shaped wall opening (22) of the radially outer part (14) of the connecting unit (10).

2. Tube connection according to claim 1, characterised in that the non-circular cross-section of one (24) of the two cooperating wall openings (22, 24) of the connecting unit (10) is formed by a circle (26) and narrow semi-oval (28), and in that the toggle (12) has a shaft (40) with a circular cross-section adapted to the form of the circle (26) and, at the radially inner end of the shaft (40), a turnbolt (38) adapted to fit through the semi-oval (28).

3. Tube connection according to claim 2, characterised in that the cross-section of the wall opening (24) which is a combination of circle and semi-oval is formed by a circle (26) and a narrower complete oval (28) concentric thereto, and in that the turnbolt (38) is adapted to the complete oval (28).

4. Tube connection according to claim 2 or claim 3, characterised in that the wall opening (22) which is formed in the radially outer part (14) of the connecting unit (10) is in the form of a circular cylinder and its diameter is approximately equal to the longest dimension of the turnbolt (38), measured in the radial direction of the toggle shaft (40).

5. Tube connection according to claim 4, characterised in that the toggle (12) has a turning head (36) at the radially outer end of the shaft (40), which turning head (36) fits into the wall opening (22) in the radially outer part (14) of the connecting unit (10).

6. Tube connection according to claim 5, characterised in that the turning head (36) has a screw slot (48) the width of a coin.

7. Tube connection according to claim 5 or claim 6, characterised in that the upper surface (46) of the turning head (36), remote from the turnbolt (12), has a circular cylindrical curvature adapted to the external circular cylindrical curvature of the radially outer part (14) of the connecting unit (10).

8. Tube connection according to one of the claims 5 to 7, characterised in that the upper surface (50) of the turnbolt (38), facing the turning head (36), has a circular cylindrical curvature adapted to the internal circular cylindrical curvature of the radially inner part (18) of the connecting unit (10).

9. Tube connection according to one of the claims 6 to 8, characterised in that the screw slot (48) extends parallel to the main direction of the turnbolt (38), in that the longitudinal axis of the oval part of the wall opening (24) in the radially inner part (18) of the connecting unit (10) is arranged parallel to the longitudinal axis of the said cylindrical part (18) and in that the cylinder axis of the curvature of the upper surface (46) of the turning head (36) extends transversely to the screw slot (48) and the turnbolt (38).

10. Tube connection according to one of the claims 5 to 9, characterised in that the turning head (136) of the toggle (112) is provided, on its undersurface (158) facing the turnbolt (138), with two knobs (160) which are diametrically opposite each other with respect to this shaft (140), the connecting line of which knobs (160) extends parallel to the turnbolt (138) of the toggle (112), which knobs bear against the edge of the wall opening (124) in the radially inner part (118) of the connecting unit (110) when the toggle (112) is turned back, and thus lift the toggle (112) radially outwards.

11. Tube connection according to one of the claims 1 to 10, characterised in that each connecting stump (118) has four wall openings (124) whose radial axes, which form a cross, intersect on the axis of the stump, and in that each tube end (114) has only one wall opening (122).

12. Tube connection according to one of the claims 1 to 11, characterised in that the connecting tubes (116) are each provided on their internal surface with longitudinal grooves (156) parallel to their axis.

13. Tube connection according to one of the claims 6 to 12, characterised in that the screw slot (148) of the turning head (136) on the toggle (112) tapers in the form of a wedge in its longitudinal direction and/or in the direction of its depth.

14. Tube connection according to one of the claims 5 to 13, characterised in that the corss-section of the wall opening (122) in the radially outer part (114) of the connecting unit (110) and the longitudinal section of the turning head (136) of the toggle (112) each deviates from the circular form at least at one locating position, the deviations (154, 164) being complementary.

**Revendications**

1. Assemblage de tubes pour mobilier d'exposition ou d'habitation, ainsi que pour équipement de jeu ou de sport, avec des tubes de liaison cylindriques et des moyens d'assemblage à enfichage (20) qui présentent chaque fois au moins deux tubulures de moyen d'assemblage (18), cylindriques, formées sur une pièce de garniture pour constituer des ensembles d'enfichage (10) qui sont formés chaque fois par liaison par enfichage d'une tubulure de moyen d'assemblage (18) et d'une extrémité (14), qui lui est adaptée, d'un tube de liaison (16), chacune des deux extrémités (14) de chaque tube de liaison (16) présentant au moins un passage en paroi (22), et chaque tubulure de moyen d'assemblage (18) présentant au moins un passage en paroi (24), le passage en paroi (24) formé dans la partie radialement intérieure (18) de chaque ensemble d'enfichage (10) présentant une forme en section transversale qui s'écarte de la forme circulaire, et des pièces formant fiches (12) engagées dans les ensembles d'enfichage (10) pour le verrouillage des ensembles d'enfichage (10), pénétrant chaque fois avec adaptation des formes dans les deux passages en paroi (22, 24), amenés à se recouvrir radialement, d'un ensemble d'enfichage (10), caractérisé en ce que les pièces formant fiches sont conformées en boutons (12) pouvant tourner autour de leur axe, qui, après rotation, s'engagent derrière le bord du passage en paroi (24) dans la partie radialement intérieure (18) de l'ensemble d'enfichage (10) et qui sont noyés dans le passage en paroi (22), de conformation cylindrique, de la partie radialement extérieure (14) de l'ensemble d'enfichage (10).

2. Assemblage de tubes suivant la revendication 1, caractérisé en ce que la forme en section transversale, s'écartant de la forme circulaire, de l'un (24) des deux passages en paroi (22, 24) coopérants de l'ensemble d'enfichage (10), a une forme constituée d'un cercle (26) et d'un demi-ovale étroit (28) et en ce que le bouton (12) possède un fût (40) de section transversale circulaire, adapté à la forme circulaire (26), ainsi qu'un verrou tournant (38) s'adaptant dans le demi-ovale (28) à l'extrémité radialement intérieure du fût (40).

3. Assemblage de tubes suivant la revendication 2, caractérisé en ce que la section transversale de passage en paroi (24) présentant une forme combinée de forme circulaire et de forme demi-ovale, a une forme constituée par un cercle (26) et par un ovale entier (28) concentrique plus étroit, et en ce que le verrou tournant (38) est adapté à l'ovale entier (28).

4. Assemblage de tubes suivant la revendication 2 ou 3, caractérisé en ce que le passage en paroi (22) formé dans la partie (14) radialement extérieure de l'ensemble d'enfichage (10) est conformé en cylindre à directrice circulaire et en ce que son diamètre correspond à peu près à l'étendue la plus longue du verrou tournant (38), mesurée dans une direction radiale par rapport au fût (40) du bouton.

5. Assemblage de tubes suivant la revendication 4, caractérisé en ce que le bouton (12) possède, à l'extrémité radialement extérieure du fût (40), une tête tournante (36) passant dans le passage en paroi (22) dans la partie radialement extérieure (14) de l'ensemble d'enfichage (10).

6. Assemblage de tubes suivant la revendication 5, caractérisé en ce que la tête tournante (36) possède une fente (48) de tête de vis de la largeur d'une pièce de monnaie.

7. Assemblage de tubes suivant la revendication 5 ou 6, caractérisé en ce que la face supérieure (46), non orientée vers le verrou tournant (12) (lire 38), de la tête tournante (36), présente un bombement cylindrique à directrice circulaire conforme au bombement cylindrique à directrice circulaire extérieur de la partie radialement extérieure (14) de l'ensemble d'enfichage (10).

8. Assemblage de tubes suivant une des revendications 5 à 7, caractérisé en ce que la face supérieure (50) du verrou tournant (38), orientée vers la tête tournante (36), possède un bombement cylindrique à directrice circulaire conforme au bombement cylindrique à directrice circulaire intérieur de la partie radialement intérieure (18) de l'ensemble d'enfichage (10).

9. Assemblage de tubes suivant une des revendications 6 à 8, caractérisé en ce que la fente de tête de vis (48) s'étend parallèlement à l'étendue principale du verrou tournant (38), en ce que l'axe longitudinal de l'ovale du passage en paroi (24) est disposé dans la partie (18) radialement intérieure de l'ensemble d'enfichage (10), parallèlement à l'axe longitudinal de cette partie cylindrique (18), et en ce que l'axe du cylindre du bombement de la face supérieure (46) de la tête tournante (36) s'étend transversalement à la fente de tête de vis (48) et au verrou tournant (38).

10. Assemblage de tubes suivant une des revendications 5 à 9, caractérisé en ce que la tête tournante (136) du bouton (112) est munie à sa face inférieure (158), orientée vers le verrou tournant (138), de deux tétons (160) diamétralement opposés par rapport au fût (140), dont la ligne de liaison s'étend parallèlement au verrou tournant (138) du bouton (112) et qui, dans la rotation du bouton (112) en arrière, prennent appui sur le bord du passage en paroi (124) de la partie (118) radialement intérieure de l'ensemble d'enfichage (110) et ainsi soulèvent radialement vers l'extérieur le bouton (112).

11. Assemblage de tubes suivant une des revendications 1 à 10, caractérisé en ce que chaque tubulure de moyen d'assemblage (118) possède quatre passages en paroi (124) dont les axes radiaux formant une croix se coupent sur l'axe de la tubulure, et en ce que chaque extrémité de tube (114) ne présente qu'un passage en paroi (122).

12. Assemblage de tubes suivant une des revendications 1 à 11, caractérisé en ce que les tubes de liaison (116) sont pourvus à leur face intérieure, chaque fois, de rainures longitudinales (156) parallèles à l'axe.

13. Assemblage de tubes suivant une des revendications 6 à 12, caractérisé en ce que la fente de tête de vis (148) de la tête tournante (136) sur le bouton (112) se rétrécit en forme de coin dans sa direction longitudinale et/ou dans la direction de sa profondeur.

14. Assemblage de tubes suivant une des revendications 5 à 13, caractérisé en ce que la section transversale du passage en paroi (122) dans la partie radialement extérieure (114) de l'ensemble d'enfichage (110) et la coupe longitudinale de la tête tournante (136) du bouton (112) s'écartent un peu de la forme circulaire en au moins un point d'arrêt, les déviations (154, 164) étant complémentaires.

Fig.1.

Fig.2.

## Fig.3.

*46  12  48  36*

*14  44*

*10*

*22  50  26  40*  *50  42*  *18*

*38*

## Fig.4.

*12*

*14  22  36*  *48  46*  *44*

*28  42  40*  *28*

*50  38*

## Fig.5.

*12*

*44*

*48  40  38  36*

0 007 065

Fig.6.

Fig.7.

Fig.8.

13

Fig.9.

Fig.10.

Fig.11.